# EUROPEAN PATENT APPLICATION

(11) **EP 0 725 227 A1**
(43) Date of publication of application: **07.08.1996**
(21) Application number: 95308060.3
(22) Date of filing: 10.11.1995
(51) Int. Cl.: F16F 13/10

(54) **Hydroelastic support**

(30) Priority: 02.02.1995 GB 9502023
(71) Applicant: DRAFTEX INDUSTRIES LIMITED, Edinburgh EH3 6YY, Scotland (GB)
(72) Inventor: Deterre, Remi, F-44300 Nantes (FR); Kaelbel, Olivier, F-44000 Nantes (FR)
(74) Representative: Foster, David Martyn

(57) **Abstract**

A hydroelastic support assembly comprises a frusto-conically shaped rubber support (10) connected to a vehicle engine by an upstanding stud (12) and connected to the vehicle body by a metal platform (14). The hollow interior of the rubber support (10) defines a main hydraulic chamber (22) which is open to a damping cassette (24) via an aperture (18) in the platform (14). The cassette (24) comprises a compensation chamber (30) having a flexible wall (28) and which is connected to the main hydraulic chamber (22) via a restricted annular canal (32) to provide hydraulic damping. A flexible membrane (40) provides damping of low amplitude vibrations. The cassette (24) is made substantially completely of thermoplastic or composite material and is thus relatively inexpensive and light in weight. It is secured in the assembly by means of structural adhesive (46) and held in position while the adhesive sets by clips (47).

## Description

The invention relates to a hydroelastic support assembly for connection between two relatively movable bodies, comprising a support made of resilient material and having spaced connectors secured thereto for respective connection to the two bodies such that relative movement of the two bodies causes resilient movement of the material of the support, and hydraulic damping means responsive to and for damping the movement of hydraulic fluid subjected to the resilient movement of the support. Such a hydroelastic support assembly may be used, for example, for mounting between the engine of a motor vehicle and the body of the vehicle, so as to damp and isolate engine vibrations from the body.

Such assemblies are known, for example, from EP-A-0 258 998, EP-A-0 192 782 and WO-A-8 803 236. In many applications, however, it is necessary for the damping characteristics of the assembly to be selected or adjusted to suit the parameters of the relatively movable bodies and the degree and type of relative movement to be expected. This may be achieved by manufacturing a large range of such assemblies, each having particular damping characteristics. However, this is expensive and complex. The invention aims to overcome this problem.

According to the invention, the known assembly is characterised in that damping means comprises a unitary cassette made of thermoplastic material and incorporating a restricted passageway for the hydraulic fluid, and a chamber into which the hydraulic fluid flows via the restricted passageway in response to the said resilient movement.

Hydro-elastic support assemblies, for use in motor vehicles and embodying the invention, will now be described, by way of example only, with reference to the accompanying diagrammatic drawings in which:
Figure 1 is a cross-section through one of the support assemblies;
Figure 2 is a plan view of the support assembly of Figure 1;
Figure 3 is a cross-section through another of the support assembly;
Figure 4 is a half-plan view of the support assembly of Figure 3;
Figure 5 shows part of the support assembly of Figures 3 and 4, during a fixing operation;
Figure 6 is a cross-section through a further one of the support assembly;
Figure 7 is a cross-section through yet another one of the support assemblies; and
Figures 8 and 9 show details of modifications to the support assembly of Figure 7.

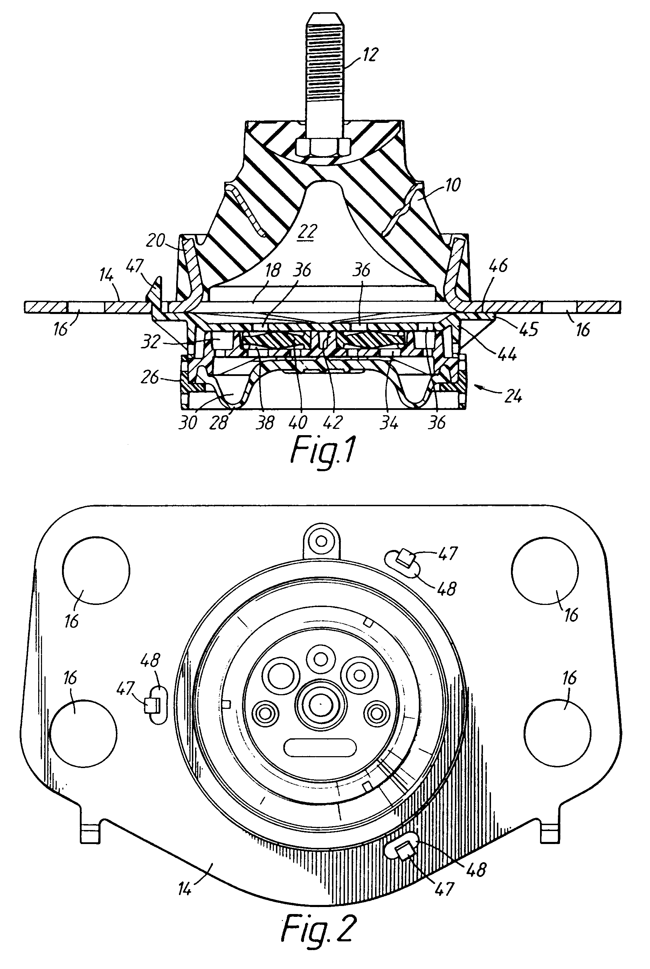

As shown in Figure 1, the hydro-elastic support assembly comprises a support 10 made of stiff rubber material which is mounted between the engine of the vehicle and the vehicle body. The support 10 is generally frusto-conical in shape. Its upper end is fast with a metal stud 12 by means of which an attachment is made to the engine of the vehicle. The base of the support 10 is connected to a metal platform 14 which is attached to the vehicle body by means of bolts (not shown) secured through holes 16 (see Figure 2). The platform 14 is centrally apertured at 18 and the metal surrounding this aperture is upturned as shown at 20 and embedded in the rubber of the support 10.

In this way, therefore, the engine of the vehicle is connected to the vehicle body by means of the stiff rubber support 10, which provides a resilient connection and helps to isolate engine vibrations from the vehicle body.

In addition, however, the support assembly provides hydraulic damping. The interior of the support 10 provides a generally conically shaped upper chamber 22 containing suitable hydraulic fluid. Vibrations of the engine are thus transmitted directly to this hydraulic fluid by the support 10. Damping of such vibrations is carried out by means of a "cassette" indicated generally at 24.

The cassette 24 comprising a circular flanged element 26 which supports a flexible membrane 28 defining a lower or compensation chamber 30. The compensation chamber 30 is arranged to be in communication with the upper chamber 22 via an annular canal 32. The canal 32 is defined in a valve body 34. The canal 34 is connected to the upper chamber 22 by means of an opening 36 and is connected to the lower chamber 30 by means of a further opening (not shown) which is positioned angularly around the canal 32 from the opening 36.

The valve body 34 also contains an annular chamber 38 in which is located a flexible membrane 40 such as made of suitable thermoplastics material and which is located on a central boss 42.

The valve body 34 is secured to the underside of a support element 44.

In use, relatively large amplitude vibrations of the engine cause the hydraulic fluid to flow into the compensation chamber 30 from the upper chamber 22, and in the reverse direction, through the canal 32. This flow of the fluid through the canal produces controlled damping of the fluid and thus damping of the vibrations, and the damping characteristics are partly influenced by the length of the canal through which the fluid flows.

Small amplitude vibrations of the fluid are transmitted through openings 46 to the membrane 40 which vibrates accordingly, its characteristics being selected to provide suitable damping.

In accordance with a feature of the invention, the members of the cassette 24 are moulded from suitable mouldable material such as thermoplastic material or composite materials in the form of suitable polymeric material reinforced with fibres. The use of such a moulded cassette 24 provides a significant saving in weight and cost as compared with previously used materials (usually steel and aluminium). In addition, the use of the thermoplastic cassette avoids the need for welding the steel or aluminium parts to the platform 14. As shown in Figure 1, the upper support 44 has a flange 45 which is secured to the underside of the platform 14 by means of a suitable adhesive positioned at 46. A structural adhesive may be used. This adhesive may have a relatively long setting time. Therefore, in order to hold the cassette 24 in position on the platform 14 while the adhesive is setting, the support 44 may be provided with integral upstanding clips 47 which extend through and clip to the edges of holes 48 in the platform (see Fig. 2). Instead, or in addition, the structural adhesive may be supplemented by an instantaneous adhesive (cyano-acrylate, for example) which serves to hold the cassette 24 in position while the structural adhesive is setting.

In this way, not only is there a significant saving in weight and cost obtained by the use of the cassette 40 made of thermoplastic material, but it is relatively easy to modify the characteristics of a particular hydroelastic support assembly to suit a particular vehicle or vehicle engine, or engine/body combination, by selecting a suitable cassette 24 (that is, one having suitable damping characteristics), and attaching it, in the manner explained, to the platform 14.

The members 26,34 and 44 of the cassette 24 are secured together as by ultrasonic welding.

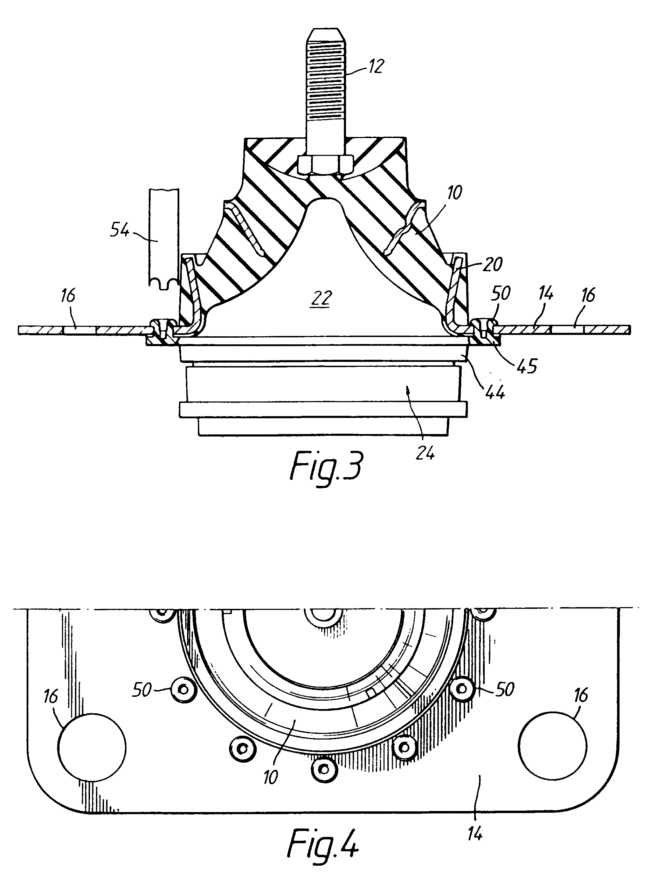

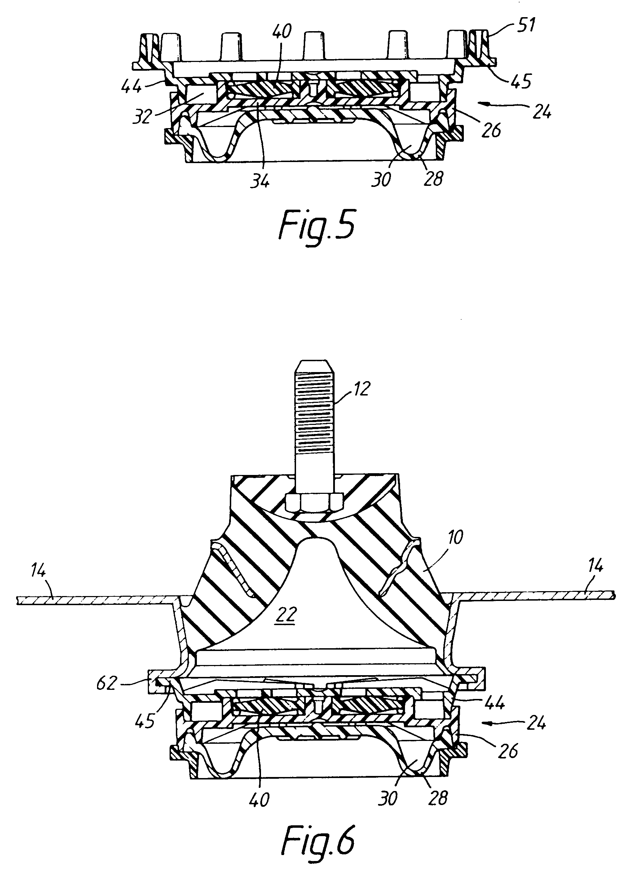

A modified form of hydroelastic support is shown in Figures 3 to 5, in which parts corresponding to parts in Figures 1 and 2 are similarly referenced. In this case, the cassette 24 is held in position on the underside of the platform 14 by means of a series of rivets 50. As shown in Figure 5, the support 44 is provided with upstanding integral pins 52, on the flange 45. These pins 52 are aligned with through holes in the platform 14, through which the pins 52 protrude. An ultrasonic rivetting head, shown diagrammatically at 54 in Figure 3, is used to process the pins 52 so as to complete the rivetting connection.

The rivetted connection between the cassette 24 and the underside of the platform 14 can be supplemented by the use of structural adhesive if required.

In Figure 6, parts corresponding to parts in the previous Figures are similarly referenced.

In the arrangement of Figure 6, the metal surrounding the aperture 18 in the platform 14 is turned downwardly at 54 and clamps the lower end of the rubber support 10 instead of being embedded within it. In addition, however, the downwardly depending metal 54 is formed with a groove 62 for receiving the flange 45, the metal being subjected to a squeezing operation, after insertion of the flange 45, to secure the cassette in position.

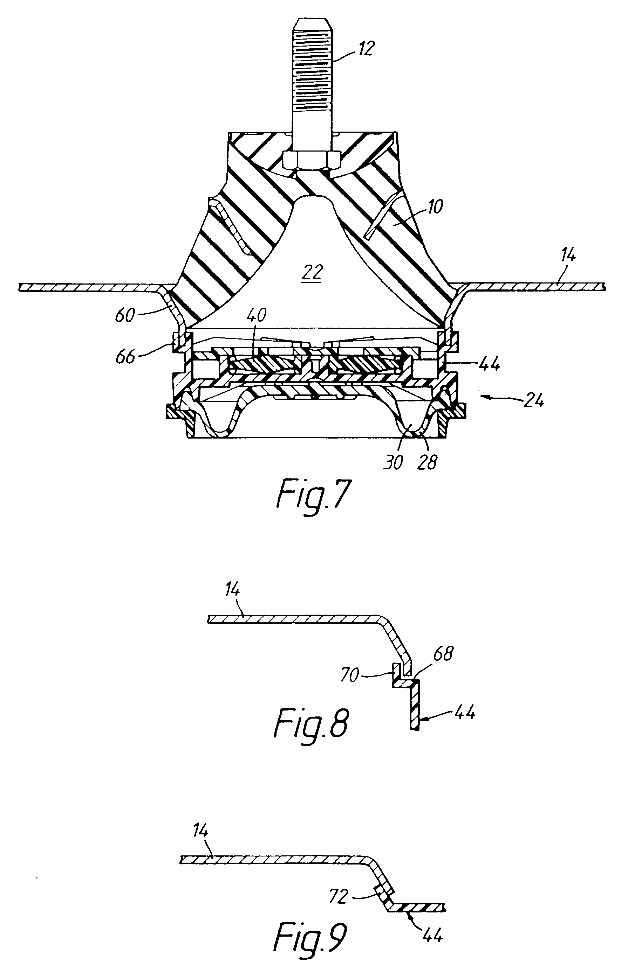

In Figure 7, again, parts corresponding to parts in the preceding Figures are similarly referenced. Again, the metal of the platform 14 is turned downwardly, at 60, to clamp the rubber at the base of the rubber support 10. In this case, however, the flange 45 is omitted. Instead, the peripheral edge of the cassette support 44 is formed with an upwardly facing channel or forked portion 66 which receives the distal edge of the downturned metal 60. The channelled or forked portion 66 helps to locate the cassette 24 in position. The securing process is completed using adhesive.

Figure 8 shows a modification in which the channelled or forked portion 66 of the support 44 is replaced by a flange 68 having a locating shoulder 70. In Figure 9, the casing 34 is provided with an upwardly and outwardly inclined shoulder 72. Each of these arrangements assists in locating the cassette 24 with respect to the platform 14 and facilitates the adhesive process.

## Claims

1. A hydroelastic support assembly for connection between two relatively movable bodies, comprising a support (10) made of resilient material and having spaced connectors (12,14,20,60) secured thereto for respective connection to the two bodies such that relative movement of the two bodies causes resilient movement of the material of the support (10), and hydraulic damping means (22,30,32) responsive to and for damping the movement of hydraulic fluid subjected to the resilient movement of the support (10), characterised in that damping means comprises a unitary cassette (24) made of thermoplastic material and incorporating a restricted passageway (32) for the hydraulic fluid, and a chamber (30) into which the hydraulic fluid flows via the restricted passageway (32) in response to the said resilient movement.

2. An assembly according to claim 1, characterised in that the cassette (24) is secured to one of the two connectors (14).

3. An assembly according to claim 2, characterised in that the cassette (24) is secured to the said connector (14) partly by adhesive (46).

4. An assembly according to claim 3, characterised by clip means (47) for at least temporarily securing the cassette (24) to the said connector (14) during setting of the adhesive (46).

5. An assembly according to any one of claims 1 to 3, characterised in that the cassette (24) is secured to the said connector (14) by thermoplastic rivetting (50).

6. An assembly according to any one of claims 1 to 3, characterised in that the cassette (24) is secured to the said connector (14) by mechanical clamping (62).

7. An assembly according to any preceding claim, characterised in that the resilient material defines a main chamber (22) containing the hydraulic fluid and in which the chamber in the cassette (24) is a flexible-wall compensation chamber (30).

8. An assembly according to claim 7, characterised in that the support comprises resilient material (10) formed into hollow substantially frusto-conical shape such that the hollow defines the main chamber (22), the other of the connectors (12) being secured to the outside of the apex of the support (10) and the said one connector (14) being secured to and around the base of the support (10).

9. An assembly according to any preceding claim, characterised in that the cassette (24) is selected from a plurality of such cassettes (24), each cassette (24) in the plurality providing different characteristics for damping the movement of the hydraulic fluid.
